# EUROPEAN PATENT APPLICATION

(11) **EP 4 738 325 A1**
(43) Date of publication of application: **06.05.2026**
(21) Application number: 24830915.5
(22) Date of filing: 27.06.2024
(51) Int. Cl.: G09G 3/20, G06F 3/14, G09G 5/00

(54) **DISPLAY PROCESSING SYSTEM AND ELECTRONIC DEVICE**

(30) Priority: 30.06.2023 CN 202310801219
(71) Applicant: Vivo Mobile Communication Co., Ltd., Dongguan, Guangdong 523863 (CN)
(72) Inventor: SHAN, Changpeng, Dongguan, Guangdong 523863 (CN)
(74) Representative: Lavoix
(86) International application number: PCT/CN2024/102109
(87) International publication number: WO 2025/002283

(57) **Abstract**

This application discloses a display processing system and an electronic device, which belongs to the field of communication technologies. The display processing system in this application includes: an image processing integrated circuit, at least two display driver integrated circuits, and a bridge integrated circuit connecting the image processing integrated circuit and the at least two display driver integrated circuits, where the bridge integrated circuit is configured to crop first display data outputted by the image processing integrated circuit, and transmit each piece of second display data in a plurality of pieces of second display data obtained through cropping to one of the display driver integrated circuits.

## Description

### CROSS-REFERENCE TO RELATED APPLICATIONS

This application claims priority to Chinese Patent Application No. 202310801219.0, entitled "DISPLAY PROCESSING SYSTEM AND ELECTRONIC DEVICE" filed with the China National Intellectual Property Administration on June 30, 2023, which is incorporated by reference in its entirety.

### TECHNICAL FIELD

This application relates to the field of communication technologies, and specifically, to a display processing system and an electronic device.

### BACKGROUND

Currently, resolution of display screens of most electronic devices is greater than resolution supported by a display driver chip (Display Driver Integrated Circuit, DDIC), so that at least two DDICs need to be connected in series for use.

However, an image processing chip can be connected to only one DDIC in series generally. Consequently, the electronic device cannot implement coexistence of the image processing chip with a plurality of DDICs. As a result, the best final display quality cannot be achieved.

### SUMMARY

An objective of embodiments of this application is to provide a display processing system and an electronic device, which can resolve a problem that the best display quality of the electronic device cannot be achieved.

According to a first aspect, an embodiment of this application provides a display processing system, including:
an image processing integrated circuit, at least two display driver integrated circuits, and a bridge integrated circuit connecting the image processing integrated circuit and the at least two display driver integrated circuits, where
the bridge integrated circuit is configured to crop first display data outputted by the image processing integrated circuit, and transmit each piece of second display data in a plurality of pieces of second display data obtained through cropping to one of the display driver integrated circuits.

According to a second aspect, an embodiment of this application provides an electronic device, including the display processing system according to the first aspect.

In the embodiments of this application, the bridge integrated circuit of the display processing system can crop the first display data outputted by the image processing integrated circuit, and transmit each piece of second display data in a plurality of pieces of second display data obtained through cropping to one of the display driver integrated circuits, so that the image processing circuit coexists with the plurality of display driver integrated circuit, which ensures maximum application of resolution supported by a display screen. In addition, image processing can also be performed on display data, achieving the best display quality.

### BRIEF DESCRIPTION OF THE DRAWINGS

FIG. 1 is a schematic diagram 1 of a display processing system according to an embodiment of this application;
FIG. 2 is a schematic diagram 2 of a display processing system according to an embodiment of this application;
FIG. 3 is a schematic diagram 3 of a display processing system according to an embodiment of this application; and
FIG. 4 is a schematic structural diagram of an electronic device according to an embodiment of this application.

### DETAILED DESCRIPTION

The following clearly describes technical solutions in the embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application shall fall within the protection scope of this application.

In the specification and claims of this application, the terms "first", "second", and the like are used to distinguish similar objects, but are not used to describe a specific sequence or order. It may be understood that the data used in such a way is interchangeable in proper circumstances, so that the embodiments of this application described herein can be implemented in other sequences than the sequence illustrated or described herein, and the objects distinguished through "first", "second", and the like are generally of a same type and the number of the objects are not limited, for example, a first object may be one or more than one. In addition, "and/or" in this specification and the claims represents at least one of the connected objects, and a character "/" used herein generally indicates an "or" relationship between associated objects.

A display processing system according to the embodiments of this application is described in detail below with reference to the accompanying drawings through specific embodiments and application scenarios thereof.

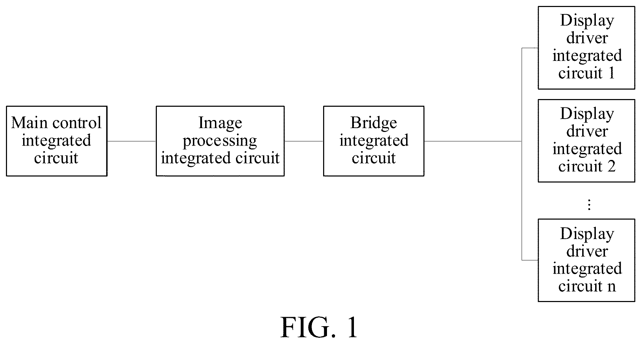

As shown in FIG. 1, an embodiment of this application provides a display processing system, including:
an image processing integrated circuit, at least two display driver integrated circuits, and a bridge integrated circuit connecting the image processing integrated circuit and the at least two display driver integrated circuits, where
the bridge integrated circuit is configured to crop first display data outputted by the image processing integrated circuit, and transmit each piece of second display data in a plurality of pieces of second display data obtained through cropping to one of the display driver integrated circuits.

In this way, according to the display processing system in the embodiments of this application, the bridge integrated circuit of the display processing system can crop the first display data outputted by the image processing integrated circuit, and transmit each piece of second display data in a plurality of pieces of second display data obtained through cropping to one of the display driver integrated circuits, so that the image processing circuit coexists with the plurality of display driver integrated circuit, which ensures maximum application of resolution supported by a display screen. In addition, image processing can also be performed on display data, achieving the best display quality.

It should be noted that, in the embodiments, the image processing integrated circuit is also referred to as an image processing chip, the bridge integrated circuit is also referred to as a bridge chip (Mobile Industry Processor Interface, MIPI), and the display driver integrated circuit is also referred to as a display driver chip (DDIC).

Optionally, as shown in FIG. 1, the display processing system further includes:
a main control integrated circuit connected to the image processing integrated circuit.

The main control integrated circuit (also referred to as a main control chip) can pre-process source display data, and then transmit pre-processed source display data to the image processing integrated circuit for subsequent processing.

For example, a receiving end of the main control integrated circuit is connected to a camera of an electronic device to which the display processing system in this application is applied. After content shot by the camera is directly transmitted to the main control integrated circuit for pre-processing, the main control integrated circuit transmits pre-processed shot content to the image processing integrated circuit. Certainly, the receiving end of the main control integrated circuit may alternatively receive source display data other than the content shot by the camera.

Optionally, the bridge integrated circuit includes a decoding assembly, a storage assembly, and a cropping assembly, where
the decoding assembly is configured to decode the first display data;
the storage assembly is configured to store decoded first display data; and
the cropping assembly is configured to crop the decoded first display data.

In this way, after receiving the first display data, the bridge integrated circuit can first decode the first display data through the decoding assembly, and the decoded first display data is stored by the storage assembly. The cropping assembly may directly crop the first display data decoded by the decoding assembly, or crop the decoded first display data extracted from the storage assembly.

Optionally, each of the at least two display driver integrated circuits drives a different display area.

For example, the display processing system includes two display driver integrated circuits, which are respectively configured to drive a left screen and a right screen of the display screen. After receiving the first display data, the bridge integrated circuit of the display processing system crops the first display data into left half-screen data and right half-screen data, and then transmits the left half-screen data and the right half-screen data to the two display driver integrated circuits, to implement high-quality display of the first display data on the display screen.

Optionally, in this embodiment, a first receiving end of the image processing integrated circuit is connected to a first sending end of the main control integrated circuit, a second receiving end of the image processing integrated circuit is connected to a second sending end of the main control integrated circuit, a first sending end of the image processing integrated circuit is connected to a first receiving end of the bridge integrated circuit, and a second sending end of the image processing integrated circuit is connected to a first receiving end of the main control integrated circuit.

Considering use of different data, the content shot by the camera of the electronic device to which the display processing system in this application is applied is recorded as first-type source display data, and other source display data is recorded as second-type source display data. The main control integrated circuit transmits source display data of different types to the image processing integrated circuit without using a port. The image processing integrated circuit may output the first display data to the bridge integrated circuit through the first sending end. In addition, the image processing integrated circuit may alternatively output fifth display data to the main control integrated circuit through the second sending end.

In an implementation, the fifth display data is data obtained after the first-type source display data is processed by the image processing chip, to implement that display of a screenshot or screen recording image outputted by the main control integrated circuit is consistent with what a user sees during shooting.

Optionally, the image processing integrated circuit includes:
a first selection circuit, a data processing assembly, and a second selection circuit, where
the first selection circuit is configured to transmit third display data to the first sending end of the image processing integrated circuit or the data processing assembly, and the third display data includes data received by at least one of the first receiving end of the image processing integrated circuit and the second receiving end of the image processing integrated circuit;
the data processing assembly is configured to perform corresponding data processing on the third display data according to a processing requirement of the third display data; and
the second selection circuit is configured to transmit fourth display data outputted by the data processing assembly to the first sending end of the image processing integrated circuit or the second sending end of the image processing integrated circuit.

In this way, the data received by at least one of the first receiving end of the image processing integrated circuit and the second receiving end of the image processing integrated circuit can be directly outputted to the bridge integrated circuit through the first selection circuit. Alternatively, the data can be outputted to the data processing assembly through the first selection circuit for data processing according to a corresponding processing requirement, and then outputted to the bridge integrated circuit or the main control integrated circuit through the second selection circuit.

If the fourth display data is transmitted to the first sending end of the image processing integrated circuit, the fourth display data is the foregoing first display data. If the fourth display data is transmitted to the second sending end of the image processing integrated circuit, the fourth display data is the foregoing fifth display data.

Optionally, the data processing assembly supports at least one of the following processing:
noise reduction;
frame interpolation;
high-dynamic range; and
super-resolution.

Certainly, data processing supported by the data processing assembly is not limited to the foregoing processing content, and is not listed one by one herein again.

It should be understood that, in this embodiment, the processing requirement is used for indicating what processing needs to be performed on the data by the data processing assembly. Specifically, processing requirements for display data of different types are different. For example, there is no need to perform noise reduction on the second-type source display data.

Optionally, the first selection circuit includes a first switch and a second switch, where
a first end of the first switch is connected to the first receiving end of the image processing integrated circuit, and a second end of the first switch is connected to the first sending end of the image processing integrated circuit; and
a first end of the second switch is connected to the first receiving end of the image processing integrated circuit, a second end of the second switch is connected to the second receiving end of the image processing integrated circuit, and a third end of the second switch is connected to an input end of the data processing assembly.

Therefore, for the data received by the first receiving end of the image processing integrated circuit, whether the data is transmitted to the first sending end of the image processing integrated circuit can be controlled through the first switch; and additionally, whether the data is transmitted to the data processing assembly of the image processing integrated circuit can be controlled through the second switch. For the data received by the second receiving end of the image processing integrated circuit, whether the data is transmitted to the data processing assembly of the image processing integrated circuit can also be controlled through the second switch.

Optionally, the second selection circuit includes a third switch and a fourth switch, where
a first end of the third switch is connected to a third end of the fourth switch, and a second end of the third switch is connected to the first sending end of the image processing integrated circuit; and
a first end of the fourth switch is connected to an output end of the data processing assembly, and a second end of the fourth switch is connected to the second sending end of the image processing integrated circuit.

In other words, for data outputted by the data processing assembly of the image processing integrated circuit, whether the data is transmitted to the second sending end of the image processing integrated circuit or the first end of the third switch can be controlled through the fourth switch; and additionally, whether the data is transmitted to the first sending end of the image processing integrated circuit can be controlled through the third switch.

Optionally, when the first switch is turned off, the second switch is turned on, the first end of the second switch is in communication with the third end of the second switch, the third switch is turned on, the fourth switch is turned on, and the first end of the fourth switch is in communication with the third end of the fourth switch, after being transmitted to the data processing assembly through the second switch, the data received by the first receiving end of the image processing integrated circuit is transmitted to the first sending end of the image processing integrated circuit through the data processing assembly, the fourth switch, and the third switch sequentially, and is sent to the bridge integrated circuit by the first sending end of the image processing integrated circuit.

Optionally, when the first switch is turned on, the second switch is turned off, the third switch is turned off, and the fourth switch is turned off, the data received by the first receiving end of the image processing integrated circuit is transmitted to the first sending end of the image processing integrated circuit through the first switch, and is sent to the bridge integrated circuit by the first sending end of the image processing integrated circuit.

Optionally, when the first switch is turned off, the second switch is turned on, the second end of the second switch is in communication with the third end of the second switch, the third switch is turned off, the fourth switch is turned on, and the first end of the fourth switch is in communication with the second end of the fourth switch, after being transmitted to the data processing assembly through the second switch, the data received by the second receiving end of the image processing integrated circuit is transmitted to the second sending end of the image processing integrated circuit through the data processing assembly and the fourth switch sequentially, and is sent to the main control integrated circuit by the second sending end of the image processing integrated circuit.

After obtaining the data sent by the second sending end of the image processing integrated circuit, the main control integrated circuit can transmit the data processed by the image processing integrated circuit to the first receiving end of the image processing integrated circuit. In this case, the first switch is turned on, the second switch is turned off, and the first receiving end of the image processing integrated circuit is in communication with the first sending end of the image processing integrated circuit through the first switch, implementing that the data received by the first receiving end of the image processing integrated circuit is outputted through an analog bypass (analog bypass) in the image processing integrated circuit and is finally transmitted to the bridge chip by the first sending end of the image processing integrated circuit.

Certainly, in this embodiment, the third switch may alternatively be a single-pole double-throw switch. A fixed end of the third switch is connected to the first sending end of the image processing integrated circuit, a first movable end of the third switch is connected to the third end of the fourth switch, and a second movable end of the third switch is connected to the second end of the first switch, to implement that the data outputted by the data processing assembly of the image processing integrated circuit or the data received by the first receiving end of the image processing integrated circuit is controlled, through the third switch, to be transmitted to the first sending end of the image processing integrated circuit.

Optionally, the second selection circuit further includes a fifth switch and a sixth switch, where
a first end of the fifth switch is connected to an output end of the data processing assembly, and a second end of the fifth switch is connected to the first sending end of the image processing integrated circuit; and
a first end of the sixth switch is connected to the output end of the data processing assembly, and a second end of the sixth switch is connected to the second sending end of the image processing integrated circuit.

In other words, for data outputted by the data processing assembly of the image processing integrated circuit, whether the data is transmitted to the second sending end of the image processing integrated circuit can be controlled through the sixth switch; and additionally, whether the data is transmitted to the first sending end of the image processing integrated circuit can be controlled through the fifth switch.

Optionally, when the first switch is turned off, the second switch is turned on, the second end of the second switch is in communication with the third end of the second switch, and the fifth switch is turned on, after being transmitted to the data processing assembly through the second switch, the data received by the second receiving end of the image processing integrated circuit is transmitted to the first sending end of the image processing integrated circuit through the data processing assembly and the fifth switch sequentially, and is sent to the bridge integrated circuit by the first sending end of the image processing integrated circuit.

Optionally, when the sixth switch is turned on, data outputted by the data processing assembly is further capable of being sent to the main control integrated circuit through the second sending end of the image processing integrated circuit.

In other words, when the first switch is turned off, the second switch is turned on, the second end of the second switch is in communication with the third end of the second switch, and the sixth switch is turned on, the data outputted by the data processing assembly is transmitted to the second sending end of the image processing integrated circuit through the sixth switch, and is then sent to the main control integrated circuit. For example, there is a scenario in which the data processed by the data processing assembly needs to be stored in storage space through the main control integrated circuit.

Optionally, when the first switch is turned on, the second switch is turned off, the fifth switch is turned off, and the sixth switch is turned off, the data received by the first receiving end of the image processing integrated circuit is transmitted to the first sending end of the image processing integrated circuit through the first switch, and is sent to the bridge integrated circuit by the first sending end of the image processing integrated circuit.

Certainly, in this embodiment, the fifth switch may alternatively be a single-pole double-throw switch. A fixed end of the fifth switch is connected to the first sending end of the image processing integrated circuit, a first movable end of the fifth switch is connected to the output end of the data processing assembly, and a second movable end of the fifth switch is connected to the second end of the first switch, to implement that the data outputted by the data processing assembly of the image processing integrated circuit or the data received by the first receiving end of the image processing integrated circuit is controlled, through a seventh switch, to be transmitted to the first sending end of the image processing integrated circuit.

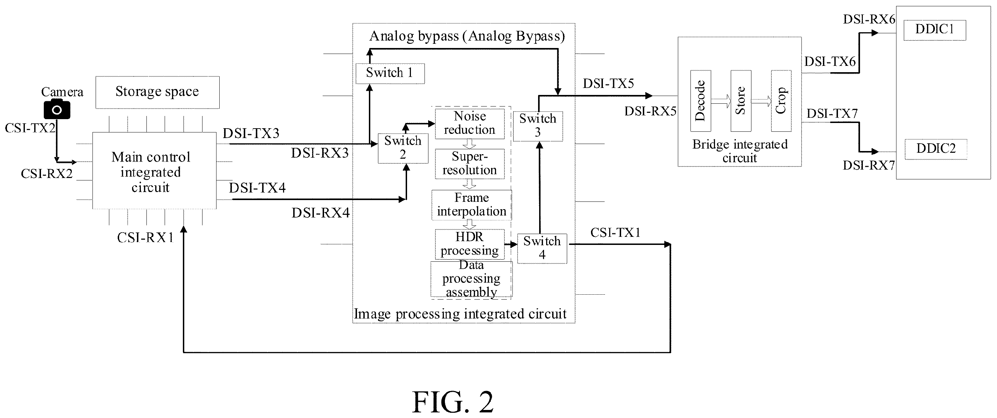

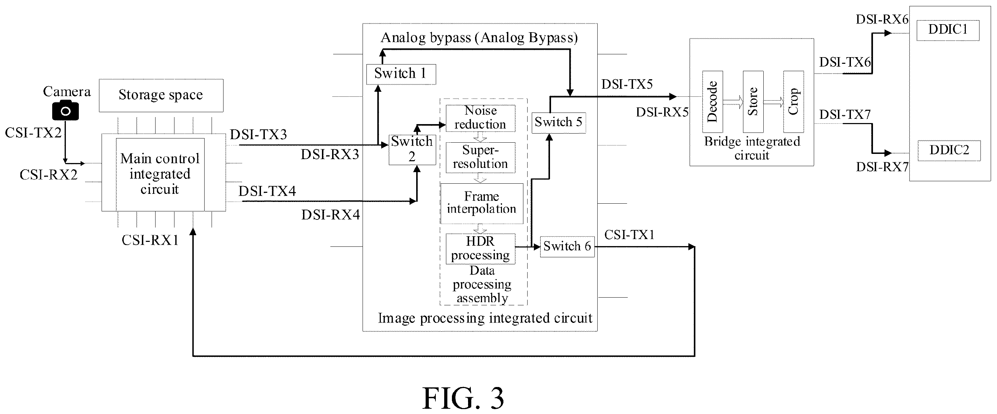

Specific structure implementations of the display processing system in the embodiments of this application are described below with FIG. 2 and FIG. 3 as examples.

In FIG. 2 and FIG. 3, only a part of camera serial interface transmitters (Camera serial Interface Transmition, CSI-TX), a part of camera serial interface receivers (Camera serial interface Receiver, CSI-RX), a part of display serial interface transmitters (Display Serial Interface Transmition, DSI-TX), and a part of display serial interface receivers (Display serial interface Receiver, DSI-RX) are shown. A DSI-TX, a DSI-RX, a CSI-TX, and a CSI-RX of each integrated circuit are not limited to those shown in the figures. A DDIC1 and a DDIC2 are arranged in each of the display processing systems in FIG. 2 and FIG. 3.

In FIG. 2 and FIG. 3, a CSI-TX1 indicates the second sending end of the image processing integrated circuit; a CSI-RX1 indicates the first receiving end of the main control integrated circuit; a CSI-TX2 indicates an output end of the camera; a CSI-RX2 indicates the second receiving end of the main control integrated circuit; a DSI-TX3 indicates the first sending end of the main control integrated circuit; a DSI-RX3 indicates the first receiving end of the image processing integrated circuit; a DSI-TX4 indicates the second sending end of the main control integrated circuit; a DSI-RX4 indicates the second receiving end of the image processing integrated circuit; a DSI-TX5 indicates the first sending end of the image processing integrated circuit; a DSI-RX5 indicates the first receiving end of the bridge integrated circuit; a DSI-TX6 indicates the first sending end of the bridge integrated circuit; a DSI-RX6 indicates a receiving end of the DDIC1; a DSI-TX7 indicates the second sending end of the bridge integrated circuit; a DSI-RX7 indicates a receiving end of the DDIC2; a switch 1 indicates the first switch, where the DSI-RX3 is in communication with the analog bypass when the first switch is in an on state, and the DSI-RX3 is disconnected from the analog bypass when the first switch is in an off state; a switch 2 indicates the second switch, for selection of communication with the DSI-RX3 or the DSI-RX4; a switch 3 indicates the third switch, where when the third switch is in an on state, display content (the outputted first display data) obtained through processing by the image processing chip is transmitted to the bridge chip (such as a mobile industry processor interface (Mobile Industry Processor Interface, MIPI) bridge chip) through the TX5, and when the third switch is in an off state, the display content obtained through processing by the image processing chip is not transmitted to the MIPI bridge chip through the TX5; a switch 4 indicates the fourth switch, for selection of communication with the switch 3 or the CSI-TX1; a switch 5 indicates the fifth switch, where when the fifth switch is in an on state, the display content (the outputted first display data) obtained through processing by the image processing chip is transmitted to the MIPI bridge chip through the TX5, and when the fifth switch is in an off state, the display content obtained through processing by the image processing chip is not transmitted to the MIPI bridge chip through the TX5; and a switch 6 indicates that when the switch 6 is in an on state, the display content (the outputted first display data) obtained through processing by the image processing chip is transmitted to the main control chip through the TX1, and when the switch 6 is in an off state, the display content obtained through processing by the image processing chip is not transmitted to the main control chip through the TX1.

All the switches are single-pole single-throw switches. The DSI-TX3 mainly transmits the second-type source display data, and the DSI-TX4 mainly transmits the first-type source display data.

Scenario 1: As shown in FIG. 2, the main control chip transmits content (the second-type source display data) to be displayed on the display screen to the DSI-RX3 of the image processing chip through the DSI-TX3 of the main control chip. In this case, the switch 1 is turned off, the switch 2 is turned on, and the DSI-RX3 of the image processing chip transmits the to-be-displayed content to the data processing assembly inside the image processing chip. The data processing assembly may select, according to the processing requirement (which may be defined by the scenario), to perform super-resolution, frame interpolation, and high-dynamic range (High-Dynamic Range, HDR) processing on data. Processed data becomes clearer, a video becomes smoother, and HDR processing image contrast and color display are better. In this case, the switch 3 and the switch 4 are both turned on. The display content obtained through processing by the image processing chip is connected to the switch 3 through the switch 4, and is transmitted to the DSI-RX5 of the MIPI bridge chip through the DSI-TX5 after the switch 3 is turned on. The received display content is cropped into left half-screen data and right half-screen data inside the MIP bridge chip. The left half-screen data is transmitted to the DDIC1 through the DSI-TX6, the right half-screen data is transmitted to the DDIC2 through the DSI-TX7, and data obtained through processing by the DDIC1 and the DDIC2 is displayed on the display screen.

Scenario 2: As shown in FIG. 2, the main control chip transmits the content (the second-type source display data) to be displayed on the display screen to the DSI-RX3 of the image processing chip through the DSI-TX3 of the main control chip. In this case, the switch 2, the switch 3, and the switch 4 are turned off, and the switch 1 is turned on. The display content is transmitted to the analog bypass path inside the image processing chip through the DSI-RX3 of the image processing chip, and then is transmitted to the DSI-RX5 of the MIPI bridge chip through the DSI-TX5. The received display content is cropped into the left half-screen data and the right half-screen data inside the MIPI bridge chip. The left half-screen data is transmitted to the DDIC1 through the DSI-TX6, the right half-screen data is transmitted to the DDIC2 through the DSI-TX7, and data obtained through processing by the DDIC1 and the DDIC2 is displayed on the display screen. Certainly, for a video and a picture (the first-type source display data) that are shot by the camera, after the camera transmits the video and the picture to the main control chip through the CSI-TX2, the main control chip can also display the first-type source display data on the display screen in a similar manner.

Scenario 3: As shown in FIG. 2, the video and the picture (the first-type source display data) that are shot by the camera are transmitted to the main control chip through the CSI-TX2, and the main control chip transmits the received video and the received picture to the DXI-RX4 of the image processing chip through the DSI-TX4. In this case, the switch 1 is turned off, and the switch 2 is turned on for communication with the DXI-RX4 of the image processing chip. Content shot by a mobile phone is transmitted to the data processing assembly inside the image processing chip, and noise reduction, frame interpolation, and HDR processing may be selected to be performed on the shot content according to the processing requirement. Through the data processing assembly, the content, especially content shot at night, becomes clearer. In this case, the switch 4 is turned on for communication with the CSI-TX1 of the image processing chip. The shot content obtained through processing by the image processing chip is transmitted to the CSI-RX1 of the main control chip through the CSI-TX1, and the main control chip transmits the video and the picture obtained through processing by the image processing chip to the DSI-RX3 of the image processing chip through the DSI-TX3 of the main control chip. In this case, the switch 1 is turned on, the switch 2 is turned off, and the switch 3 is turned off. The DSI-RX3 of the image processing chip and the analog bypass inside the image processing chip are transmitted to the DSI-RX5 of the MIPI bridge chip through the DSI-TX5 of the image processing chip. The received display content is cropped into the left half-screen data and the right half-screen data inside the MIPI bridge chip. The left half-screen data is transmitted to the DDIC1 through the DSI-TX6, the right half-screen data is transmitted to the DDIC2 (a display driver chip 2) through the DSI-TX7, and data obtained through processing by the DDIC1 and the DDIC2 is displayed on the display screen in real time, achieving what you see is what you get. The video or the picture obtained through processing by the image processing chip is received through the CSI-RX1 of the main control chip, and the main control chip may select to store the processed video or the processed picture in the storage space for ease of subsequent viewing.

In this scenario, discrete graphics card noise reduction is also performed on content of a screenshot or content cut from a screen recording, resolving a problem of no noise reduction performed on the screenshot obtained during user photo-taking or an image of the screen recording.

Scenario 4: As shown in FIG. 3, the video and the picture (the first-type source display data) that are shot by the camera are transmitted to the main control chip through the CSI-TX2, and the main control chip transmits the received video and the received picture to the DXI-RX4 of the image processing chip through the DSI-TX4. In this case, the switch 1 is turned off, and the switch 2 is turned on for communication with the DXI-RX4 of the image processing chip. Content shot by a mobile phone is transmitted to the data processing assembly inside the image processing chip, and noise reduction, frame interpolation, and HDR processing may be selected to be performed on the shot content according to the processing requirement. Through the processing, the content, especially content shot at night, becomes clearer. In this case, the switch 6 is turned off, and the switch 5 is turned on. An image obtained through processing by the image processing chip is transmitted to the DSI-RX5 of the MIPI bridge chip through the DSI-TX5 of the image processing chip. The received display data is cropped into the left half-screen data and the right half-screen data inside the MIPI bridge chip. The left half-screen data is transmitted to the DDIC1 through the DSI-TX6, the right half-screen data is transmitted to the DDIC2 through the DSI-TX7, and the data obtained through processing by the DDIC is displayed on the display screen in real time, achieving what you see is what you get. If the main control chip needs to store a processed graphic resource, the switch 6 is turned on, the content obtained through processing by the image processing chip is transmitted to the CSI-RX1 of the main control chip through the CSI-TX1, and the main control chip stores the processed image resource in the storage space, for ease of subsequent viewing.

In this scenario, display processing latency is lower.

Scenario 5: The video and the picture (the first-type source display data) that are shot by the camera are transmitted to the main control chip through the CSI-TX2, and the main control chip transmits the received video and the received picture to the DXI-RX3 of the image processing chip through the DSI-TX3. In this case, the switch 2, the switch 5, and the switch 6 are turned off, and the switch 1 is turned on for communication with the DXI-RX3 of the image processing chip. Content shot by a mobile phone is transmitted to the analog bypass inside the image processing chip, and then is transmitted to the DSI-RX5 of the MIPI bridge chip through the DSI-TX5 of the image processing chip. The received display data is cropped into the left half-screen data and the right half-screen data inside the MIPI bridge chip. The left half-screen data is transmitted to the DDIC1 through the DSI-TX6, the right half-screen data is transmitted to the DDIC2 through the DSI-TX7, and data obtained through processing by the DDIC is displayed on the display screen in real time. The main control chip may alternatively select to store the video or the picture that is shot by the camera in the storage space for ease of subsequent viewing. Certainly, for the content (the second-type source display data) to be displayed on the display screen, the second-type source display data can also be displayed on the display screen in a similar manner.

Scenario 6: As shown in FIG. 3, the main control chip transmits content (the second-type source display data) to be displayed on the display screen to the DSI-RX3 of the image processing chip through the DSI-TX3 of the main control chip. In this case, the switch 1 is turned off, the switch 2 is turned on, and DSI-RX3 of the image processing chip transmits the display content to the data processing assembly inside the image processing chip, and the data processing assembly may select, according to the processing requirement (which may be defined by the scenario), to perform super-resolution, frame interpolation, and HDR processing on data. Processed data becomes clearer, a video becomes smoother, and HDR processing image contrast and color display are better. In this case, the switch 5 is turned on, and the switch 6 is turned off. The display content obtained through processing by the image processing chip is transmitted to the DSI-RX5 of the MIPI bridge chip through the switch 5 and the DSI-TX5. The received display content is cropped into the left half-screen data and the right half-screen data inside the MIP bridge chip. The left half-screen data is transmitted to the DDIC1 through the DSI-TX6, the right half-screen data is transmitted to the DDIC2 through the DSI-TX7, and data obtained through processing by the DDIC1 and the DDIC2 is displayed on the display screen.

In conclusion, according to the display processing system in the embodiments of this application, functions such as video frame interpolation, video super-resolution, and HDR processing of an independent image processing integrated circuit can be used, and the picture and the video that are shot by the camera have better clarity and better user experience after noise reduction and super-resolution processing.

An embodiment of this application further provides an electronic device, including the foregoing display processing system.

The electronic device may be a terminal or another device other than a terminal. For example, the electronic device may be a mobile phone, a tablet computer, a notebook computer, a palm computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or the like, and may alternatively be a server, a network attached storage (Network Attached Storage, NAS), a personal computer (personal computer, PC), a television (television, TV), a teller machine, a self-service machine, or the like. This is not specifically limited in this embodiment of this application.

Certainly, a display screen of the electronic device is a foldable screen.

The electronic device provided in this embodiment of this application can implement all processes implemented by the embodiments of the display processing system shown in FIG. 1 to FIG. 3, and details are not described herein again to avoid repetition.

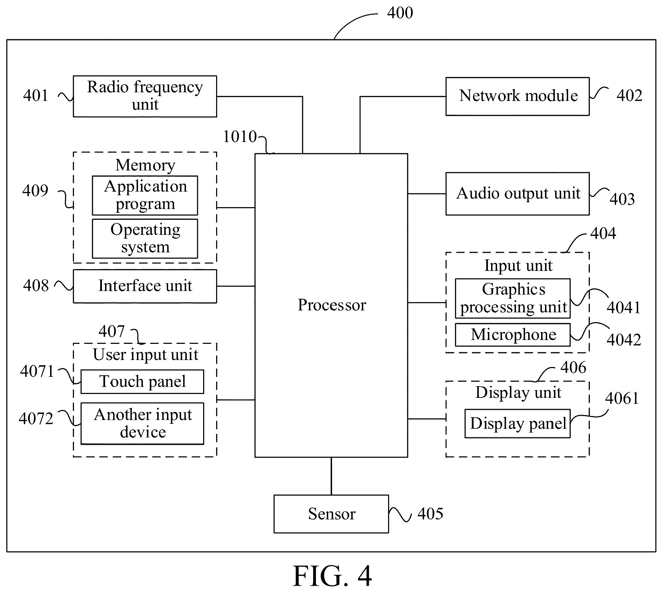

FIG. 4 is a schematic diagram of a hardware structure of an electronic device according to an embodiment of this application.

The electronic device 400 includes, but is not limited to, components such as a radio frequency unit 401, a network module 402, an audio output unit 403, an input unit 404, a sensor 405, a display unit 406, a user input unit 407, an interface unit 408, a memory 409, and a processor 410.

A person skilled in the art may understand that the electronic device 400 may further include a power supply (such as a battery) for supplying power to the components. The power supply may be logically connected to the processor 410 by using a power management system, thereby implementing functions such as charging, discharging, and power consumption management by using the power management system. The structure of the electronic device shown in FIG. 4 constitutes no limitation on the electronic device, and the electronic device may include more or fewer components than those shown in the figure, or some components may be combined, or a different component deployment may be used, which are not described herein again.

The electronic device further includes the foregoing display processing system.

It is to be understood that, in this embodiment of this application, the input unit 404 may include a graphics processing unit (Graphics Processing Unit, GPU) 4041 and a microphone 4042, and the graphics processing unit 4041 processes static pictures or video image data obtained by an image capturing device (such as a camera) in a video capturing mode or an image capturing mode. The display unit 406 may include a display panel 4061, and the display panel 4061 may be configured by using a liquid crystal display, an organic light-emitting diode, or the like. The user input unit 407 includes at least one of a touch panel 4071 and another input device 4072. The touch panel 4071 is also referred to as a touch screen. The touch panel 4071 may include two parts: a touch detection apparatus and a touch controller. The another input device 4072 may include, but is not limited to, a physical keyboard, a functional key (such as a volume control key or a switch key), a track ball, a mouse, and a joystick, which are not described herein again.

The memory 409 may be configured to store a software program and various data. The memory 409 may mainly include a first storage area storing a program or instructions and a second storage area storing data, where the first storage area may store an operating system, an application program or instructions required by at least one function (such as a sound playing function or an image playing function), and the like. In addition, the memory 409 may include a volatile memory or a non-volatile memory. Alternatively, the memory 409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 409 in this embodiment of this application includes, but is not limited to, these memories and any other suitable types of memories.

The processor 410 may include one or more processing units. Optionally, the processor 410 integrates an application processor and a modem processor, where the application processor mainly processes an operation involving the operating system, the user interface, the application program, and the like, and the modem processor mainly processes a wireless communication signal, for example, a baseband processor. It may be understood that the foregoing modem processor may alternatively not be integrated into the processor 410.

It is to be understood that the main control chip mentioned in this embodiment of this application may also be referred to as a system-level chip, a system chip, a chip system, a system-on-chip, or the like.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the description of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disk) and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A display processing system, comprising:
an image processing integrated circuit, at least two display driver integrated circuits, and a bridge integrated circuit connecting the image processing integrated circuit and the at least two display driver integrated circuits, wherein
the bridge integrated circuit is configured to crop first display data outputted by the image processing integrated circuit, and transmit each piece of second display data in a plurality of pieces of second display data obtained through cropping to one of the display driver integrated circuits.

2. The display processing system according to claim 1, further comprising:
a main control integrated circuit connected to the image processing integrated circuit.

3. The display processing system according to claim 2, wherein a first receiving end of the image processing integrated circuit is connected to a first sending end of the main control integrated circuit, a second receiving end of the image processing integrated circuit is connected to a second sending end of the main control integrated circuit, a first sending end of the image processing integrated circuit is connected to a first receiving end of the bridge integrated circuit, and a second sending end of the image processing integrated circuit is connected to a first receiving end of the main control integrated circuit.

4. The display processing system according to claim 3, wherein the image processing integrated circuit comprises:
a first selection circuit, a data processing assembly, and a second selection circuit, wherein
the first selection circuit is configured to transmit third display data to the first sending end of the image processing integrated circuit or the data processing assembly, and the third display data comprises data received by at least one of the first receiving end of the image processing integrated circuit and the second receiving end of the image processing integrated circuit;
the data processing assembly is configured to perform corresponding data processing on the third display data according to a processing requirement of the third display data; and
the second selection circuit is configured to transmit fourth display data outputted by the data processing assembly to the first sending end of the image processing integrated circuit or the second sending end of the image processing integrated circuit.

5. The display processing system according to claim 4, wherein the first selection circuit comprises a first switch and a second switch, wherein
a first end of the first switch is connected to the first receiving end of the image processing integrated circuit, and a second end of the first switch is connected to the first sending end of the image processing integrated circuit; and
a first end of the second switch is connected to the first receiving end of the image processing integrated circuit, a second end of the second switch is connected to the second receiving end of the image processing integrated circuit, and a third end of the second switch is connected to an input end of the data processing assembly.

6. The display processing system according to claim 5, wherein the second selection circuit comprises a third switch and a fourth switch, wherein
a first end of the third switch is connected to a third end of the fourth switch, and a second end of the third switch is connected to the first sending end of the image processing integrated circuit; and
a first end of the fourth switch is connected to an output end of the data processing assembly, and a second end of the fourth switch is connected to the second sending end of the image processing integrated circuit.

7. The display processing system according to claim 5, wherein the second selection circuit further comprises a fifth switch and a sixth switch, wherein
a first end of the fifth switch is connected to an output end of the data processing assembly, and a second end of the fifth switch is connected to the first sending end of the image processing integrated circuit; and
a first end of the sixth switch is connected to the output end of the data processing assembly, and a second end of the sixth switch is connected to the second sending end of the image processing integrated circuit.

8. The display processing system according to claim 6, wherein when the first switch is turned off, the second switch is turned on, the first end of the second switch is in communication with the third end of the second switch, the third switch is turned on, the fourth switch is turned on, and the first end of the fourth switch is in communication with the third end of the fourth switch, after being transmitted to the data processing assembly through the second switch, the data received by the first receiving end of the image processing integrated circuit is transmitted to the first sending end of the image processing integrated circuit through the data processing assembly, the fourth switch, and the third switch sequentially, and is sent to the bridge integrated circuit by the first sending end of the image processing integrated circuit.

9. The display processing system according to claim 6, wherein when the first switch is turned on, the second switch is turned off, the third switch is turned off, and the fourth switch is turned off, the data received by the first receiving end of the image processing integrated circuit is transmitted to the first sending end of the image processing integrated circuit through the first switch, and is sent to the bridge integrated circuit by the first sending end of the image processing integrated circuit.

10. The display processing system according to claim 6, wherein when the first switch is turned off, the second switch is turned on, the second end of the second switch is in communication with the third end of the second switch, the third switch is turned off, the fourth switch is turned on, and the first end of the fourth switch is in communication with the second end of the fourth switch, after being transmitted to the data processing assembly through the second switch, the data received by the second receiving end of the image processing integrated circuit is transmitted to the second sending end of the image processing integrated circuit through the data processing assembly and the fourth switch sequentially, and is sent to the main control integrated circuit by the second sending end of the image processing integrated circuit.

11. The display processing system according to claim 7, wherein when the first switch is turned off, the second switch is turned on, the second end of the second switch is in communication with the third end of the second switch, and the fifth switch is turned on, after being transmitted to the data processing assembly through the second switch, the data received by the second receiving end of the image processing integrated circuit is transmitted to the first sending end of the image processing integrated circuit through the data processing assembly and the fifth switch sequentially, and is sent to the bridge integrated circuit by the first sending end of the image processing integrated circuit.

12. The display processing system according to claim 11, wherein when the sixth switch is turned on, data outputted by the data processing assembly is further capable of being sent to the main control integrated circuit through the second sending end of the image processing integrated circuit.

13. The display processing system according to claim 7, wherein when the first switch is turned on, the second switch is turned off, the fifth switch is turned off, and the sixth switch is turned off, the data received by the first receiving end of the image processing integrated circuit is transmitted to the first sending end of the image processing integrated circuit through the first switch, and is sent to the bridge integrated circuit by the first sending end of the image processing integrated circuit.

14. The display processing system according to claim 1, wherein the bridge integrated circuit comprises a decoding assembly, a storage assembly, and a cropping assembly, wherein
the decoding assembly is configured to decode the first display data;
the storage assembly is configured to store decoded first display data; and
the cropping assembly is configured to crop the decoded first display data.

15. The display processing system according to claim 1, wherein each of the at least two display driver integrated circuits drives a different display area.

16. The display processing system according to claim 4, wherein the data processing assembly supports at least one of the following processing:
noise reduction;
frame interpolation;
high-dynamic range; and
super-resolution.

17. An electronic device, comprising the display processing system according to any one of claims 1 to 16.
